# EUROPEAN PATENT SPECIFICATION

(11) **EP 2 787 830 B1**
(45) Date of publication and mention of the grant of the patent: **13.09.2017**
(21) Application number: 12795472.5
(22) Date of filing: 06.12.2012
(51) Int. Cl.: A23C 9/152, A23C 9/154, A23G 1/52, A23P 30/40

(54) **SHELF-STABLE DAIRY MOUSSE**
BEI RAUMTEMPERATUR HALTBARES MILCHMOUSSE
MOUSSE LAITIÈRE STABLE AUX TEMPÉRATURES AMBIANTES

(30) Priority: 06.12.2011 EP 11192194
(43) Date of publication of application: 15.10.2014
(73) Proprietor: Nestec S.A., 1800 Vevey (CH)
(72) Inventor: FLORENTIN, Emmanuelle, F-14430 Hotot en Auge (FR); CHEVALIER, Jean-François, F-14100 Courtonne La Meurdrac (FR); CLAVIER MANRIQUE, Luis, F-14100 Lisieux (FR); STÖBER, Paul, F-14100 Lisieux (FR)
(74) Representative: Cogniat, Eric Jean Marie
(86) International application number: PCT/EP2012/074651
(87) International publication number: WO 2013/083697

(56) References cited:
- EP-A1- 0 649 599
- EP-A1- 1 889 544
- EP-A1- 1 949 796
- EP-A2- 2 181 603
- WO-A1-2008/090203
- DE-A1- 19 860 437
- DATABASE GNPD [Online] Mintel; 1 April 2009 (2009-04-01), Anonymous: "Chocolate Mousse Dessert", XP002669370, retrieved from www.gnpd.com Database accession no. 1072288
- DATABASE GNPD [Online] Mintel; 1 September 2008 (2008-09-01), Anonymous: "White Chocolate flavoured Mousse", XP002669371, retrieved from www.gnpd.com Database accession no. 975008
- DATABASE GNPD [Online] Mintel; 1 May 2011 (2011-05-01), Anonymous: "Chocolate Mousse", XP002669372, retrieved from www.gnpd.com Database accession no. 1544248
- DATABASE GNPD [Online] Mintel; 1 August 2011 (2011-08-01), Anonymous: "Milk Chocolate Mousse", XP002669373, retrieved from www.gnpd.com Database accession no. 1608596
- T.G. Andreasem and H.Nielsen: "Ice cream and aerated desserts"; "Chapter 8" In: Ralph Early: "The technology of dairy products", 1 January 1998 (1998-01-01), Blackie Academic &Professional, London, XP002669828, pages 301-326, page 322 - page 326
- "CHOCOLATE MOUSSE THAT'S FAR FROM LOOSE", EUROPEAN FOOD AND DRINK REVIEW, LONDON, GB, no. 2, 1 January 2002 (2002-01-01), pages 42-45, XP009075968,
- "Die eur-O-matic Technologie der Herstellung von belüfteten Milchdesserts: Choko-mousse, Yoghurt usw. /// Eur-O-matic technology for the manufacture of aerated milk desserts: chocolate mousse, yoghurt, etc", DEUTSCHE MOLKEREI-ZEITUNG, A V A VERLAG ALLGAEU GMBH, vol. 99, no. 4, 1 January 1978 (1978-01-01), pages 115-118, XP009156454, ISSN: 0366-9424
- DATABASE GNPD [Online] 1 November 2011 (2011-11-01), Anonymous: "Dark Chocolate Spread", XP002669374, retrieved from www.gnpd.com Database accession no. 1666456

## Description

### Field of the invention

The present invention relates to a dairy mousse, more particularly to a shelf-stable dairy mousse, i.e. a dairy mousse which does not need to be stored in a refrigerated environment.

### Background of the invention

Mousses (i.e. aerated food compositions) based on dairy products (i.e. milk food products), in the form of a foam obtained by whipping air or gas into a dairy base, are well known from the art.

Manufacturing a shelf-stable dairy product, having an acceptable aerated texture, is typically only possible when the dairy product has a low water activity (i.e. Aw less than 0.85), which often produces a firm chewy, undesirable texture, or if it is treated under specific functional and/or processing parameters.

Aerated dairy products have generally a water activity (Aw) above 85%, and require refrigerated storage. Even then, they often have relatively short storage life. Examples of such refrigerated mousses are, for instance, the product Feuilleté de Mousse under the brand La Laitière® mentioned in XP-002669370, or other chocolate mousses disclosed in XP-002669371 (White Chocolate Flavoured Mousse, private label), XP-002669372 (Chocolate Mousse, private label).

WO 2006/067064 describes a shelf-stable mousse based on sweetened condensed milk aerated with an inert gas. The mousse contains a foam stabilizer, an emulsifier, dairy fat, such as anhydrous butter oil, and it has a fat content of less than 25% by weight. The mousse is filled in cans and is reported to have a shelf life of up to nine months. The mousse of WO 2006/067064 is based on sweetened condensed milk (SCM) containing a high sugar content of at least 60% sugar, and the resulting mousse product has a dry matter content of over 70%.

The mousses as described in WO 2006/067064 have the drawback that their organoleptic properties are not those of a chilled dairy mousse, for instance they have a sticky consistency.

DE 19860437 A1 describes to a food product, which can be consumed frozen and defrosted. The food product comprises (wt.%): whole milk (40-60), cream (20-40), skimmed milk powder (1-4), sugar (16-34), thickening agents (0.6-2.9) and pH regulators (0.6-1.1).

EP 1949796 A1 describes a shelf-stable mousse comprising an aerated oil-in-water emulsion characterised in that the mousse has a storage modulus at 20°C of less than 50,000 Pa. It also provides a process to prepare said mousse.

EP 1889544 A1 describes an aqueous foam comprising water, at least one polysaccharide and food-grade, interfacially active particles. The present invention also describes an indulgent shelf-stable foamed food product comprising this aqueous foam. The indulgent shelf-stable foamed food products of the invention have an improved foamed and modular product texture.

EP 2181603 A2 describes a shelf stable, high moisture hot-aerated dairy product that comprises a mixture of about 10 to about 66% of a dairy component, about 20 to about 30% of a fat component, and about 0.5 to about 2.5% of a stabilizer system. The stabilizer system comprises at least a two gum system, where one gum is gelatin, or at least a three gum system, where one gum is either gelatin or carrageenan with the remaining gums being different. The mixture is aerated to about 2% to about 20% overrun while the mixture is still hot and is subsequently filled into packages at the high temperature, i.e., from about 140°F (60°C) to about 180°F (82°C). The resultant dairy product has a shelf life of at least 12 months when stored at ambient temperatures or at least 18 months when stored at refrigeration temperatures without requiring aseptic processing or packaging techniques.

EP 2181603 relates to an acid product with a maximum overrun of 20% only.

Thus, there remains a need for aerated dairy products having shelf stability and stable aerated structure, as well as the organoleptic properties of a chilled dairy mousse, such as similar whipped texture, creaminess, thickness, stickiness, melting in mouth, and freshness. The present invention provides such products.

It is an object of the invention to overcome the aforementioned drawbacks by providing a shelf-stable dairy mousse, with organoleptic properties comparable to a chilled dairy mousse.

### Summary of the invention

The invention relates to a shelf-stable dairy mousse in the form of an aerated oil-in-water emulsion, the shelf-stable dairy mousse comprising a dairy base, a fat source, an emulsifier and a hydrocolloid-based stabilizer system, as in claim 1.

This shelf stable dairy mousse is for example a chocolate mousse.

The fat can be provided by the dairy base as dairy fat, and one or more fat origins. For example, milk fat can be provided by the dairy base and/or an added milk-fat fat source. In some embodiments, the dairy base is the source for the milk fat.

According to a preferred embodiment, the fat source comprises milk fat and cocoa butter. Preferably, the fat source consists essentially of milk fat and cocoa butter.

The weight ratio of milk fat: vegetable fat varies from 25 : 75 to 60 : 40, preferably from 30 : 70 to 55 : 45, even more preferably from 35 : 65 to 50 : 50.

The fat content is from 4 to 14 wt % with respect to the shelf-stable dairy mousse, even more preferably from 8 % by weight to 12 wt % by weight (wt %).

According to a preferred embodiment, the shelf-stable dairy mousse has a total sugar content of no more than 40 wt %. For instance the total sugar content of the shelf-stable dairy mousse is from 5 wt % to 40 wt % with respect to the shelf-stable dairy mousse, preferably from 5 wt % to 30 wt %, even more preferably from 10 wt % to 25 wt %.

The mousse has a water activity (Aw) of from 0.70 to 0.99, preferably from 0.85 to 0.99. High water activity values correspond to values found in refrigerated dairy mousses.

According to a preferred embodiment, the shelf-stable dairy mousse has an overrun in the range from 10% to 200%, preferably from 50% to 190%, and more preferably from 50% to 170%.

The hydrocolloid-based stabilizer system is selected from the group consisting of agar-agar, alginates, carrageenan, gelatine, and combinations thereof. In some embodiments the hydrocolloid-based stabilizer system is selected from agar-agar, alginates or combination thereof. In some embodiments the hydrocolloid-based stabilizer system is selected from alginates.

According to a preferred embodiment, the emulsifier is selected from the group consisting of mono- and di-glycerides of fatty acids, lactic acid esters of mono- and di-glyceride, sucroesters, polyglycerol esters of fatty acids, and combinations thereof.

According to a preferred embodiment the emulsifier is present in the shelf-stable dairy composition in the range from 0.1 wt % to 1 wt %, with respect to the shelf-stable dairy composition.

The shelf-stable dairy mousse has preferably a dry content of from 25% wt % to 48 wt %.

Also disclosed is a process of preparing a shelf-stable dairy mousse as described above. The process comprises the following and successive steps: mixing the dairy base, preferably a milk base, with the other ingredients, adjusting the pH, homogenising the mixture, carrying out a heat treatment, and cooling the mixture, which is further whipped. The heat treatment is usually carried out at a temperature ranging from 130°C to 155°C.

Preferably, the process further comprises a filling step of the shelf-stable dairy mousse into a container, generally under aseptic conditions, and then providing said shelf-stable dairy mousse in a container for ambient storage. Alternatively the shelf-stable dairy mousse in a container can be kept in an intermediate storage, usually at about 4°C to about 10°C, for about 12 to 24 hours, before its storage under ambient conditions.

### Detailed description of the invention

Shelf-stable dairy mousses and methods of manufacture are provided. The shelf-stable dairy mousse of the invention comprises a dairy base, a non-milk fat, an emulsifier and a hydrocolloid-based stabilizer system. It can be aerated using any standard equipment used in the chilled dairy Industry as for example an equipment of the type MONDOMIX.

The stabilizer system according to the invention provides stability to the shelf-stable dairy mousse, thus helping in maintaining its aerated structure.

Additionally, the shelf-stable dairy mousse is easily "spoonable" so that it can easily be removed from the package for consumption, using for example, a spoon or cracker. Thus, the shelf-stable dairy mousse should have a water content comprised between 55% by weight and 75% by weight, preferably between 60% by weight and 70% by weight.

After packaging into an appropriate container, the dairy mousse made according to the invention, is shelf-stable. In other words, the dairy mousse is stable on storage at ambient temperatures, and does not require refrigeration or freezing during storage. The shelf-stable dairy mousse is stable on storage at room temperature (e.g. typical ambient storage temperatures of around 20°C) and up to about 30°C, for up to 3, preferably up to 6 months and even longer, for example from 6 to 12 months. According to the invention, the dairy mousse is stable on storage at a temperature of about 20°C to 30°C, over at least 3 months up to 6 months, or even up to 12 months, or over at least 6 months up to 12 months. It is understood though, that once the container has been opened for consumption, the dairy mousse should be stored in refrigerated conditions and consumed within a few days, as is usual for dairy products, to avoid spoilage.

"Overrun" refers to the increase in volume of the aerated shelf-stable product and also is referred to as a foaming capacity. It is measured according to the following equation: (volume of the food after aeration - volume of the food before aeration) / ((volume of the food before aeration). It is reported as a percentage value. "Aerated" (or "whipped") refers to the incorporation of a gas into a food material. For purposes herein, the gas is not particularly limited, and may be air, nitrogen, carbon dioxide, nitrous oxide, and gas combinations thereof.

The dairy base is preferably chosen from the group consisting of milk powder, full fat milk, low or no fat milk, dairy cream, anhydrous milk fat, milk proteins powders, and combinations thereof. The dairy fat is usually provided with the dairy base, as an ingredient of the dairy base. But the dairy fat can also be added, partially (in case the dairy base already comprises a dairy fat) or completely, to the dairy base.

The amount of the dairy base is important to maintain a good level of protein and fat in the final shelf-stable dairy mousse which, in combination with the emulsifier or combination of emulsifiers, contributes to the final sensory attributes of the aerated product. The content of dairy base, with respect to the shelf-stable dairy mousse, is usually from 50 wt% to 90 wt %, preferably from 60 wt % to 90 wt %.

The emulsifier is usually of the type of mono- and di-glycerides of fatty acids, lactic acid esters of mono- and di-glyceride, sucroesters, polyglicerol esters of fatty acids and combinations thereof. Furthermore, it is generally present in the range from 0.1 wt % to 1 wt %.

The content of the hydrocolloid-based stabilizer system, with respect to the shelf-stable dairy mousse, is from 0.5 to 2.5 wt %, preferably from 0.5 wt % to 2 wt % .

The fat is provided in a total amount of between from 4 to 14 wt %, preferably from 8 to 12 wt %. As explained above, it can be provided by part of the dairy base. According to the invention, the fat comprises, preferably consists of, milk fat (such as milk cream and anhydrous milk fat) and cocoa fat. Preferably, the cocoa fat is cocoa butter.

A method of making the shelf-stable dairy mousse according to the invention comprises mixing together the dairy base and the other ingredients, so that to form a dairy mixture. Preferably, the dairy base is provided as a liquid dairy base, such as milk. In an embodiment, the dairy base is provided as a dairy base powder. The other ingredients comprise the fat source, the emulsifier, and the hydrocolloid-based stabilizer system. Preferably, the other ingredients are provided as dry ingredients. When the dairy base and the other ingredients are provided as dry ingredients, they can be dry-mixed together, and then added into water. Another option is to dry-mix a premix of the other ingredients with the dairy base powder, and this dry-mix is then added into water. Yet another option is to successively add the dairy base powder, and the other ingredients, as a premix or not, into water. When the dairy base is a liquid dairy base, the other ingredients can be added into the liquid dairy base, as a dry premix, or a liquid premix, or successively as dry powders or liquid ingredients. The amount of water is adjusted so that the shelf-stable dairy mousse has a minimum water content of 55% by weight, preferably 60% by weight. The water content in the shelf-stable dairy mousse should be below 75% by weight, to avoid collapsing of the mousse, and more preferably below 70% by weight.

The dairy mixture, after pH adjustment, homogenisation and heat treatment, can be whipped to an overrun of about 10% to 200%, preferably from 50% to 190%, more preferably from 50% to 170%, for example of around 110%. Preferably, the dairy mixture is whipped at a temperature between 4°C and 15°C, preferably between 4°C and 10°C. The aerated shelf-stable dairy mousse is then filled into containers (or packages), preferably under aseptic conditions, at a temperature between about 10°C and about 20°C (for example around 15°C) and the packages are hermetically sealed. The packaged shelf-stable dairy mousse can be cooled down to provide a product having the sensory attributes of a chilled dairy mousse, such as similar whipped texture, creaminess, thickness, and stickiness, melting in mouth, and freshness. These organoleptic characteristics are usually comparative estimations established by a panel test of persons.

The manufacturing process of the shelf-stable dairy mousse according to the invention is usually the following. First, the dry ingredients are combined with the dairy base, preferably a milk base, and mixed together to form a dairy mixture. If the dairy base is provided as a powder, the ingredients are mixed together with water. The amount of water, or of liquid dairy base, is adjusted to reach a dry matter content of from 25 wt % to 48 wt %. The pH of the dairy mixture can then be adjusted to a substantially neutral pH, from about 6 to about 7.5. The mixture is then homogenized and heated up to a temperature of from about 130°C to 155°C. This step is performed to remove microbial contamination, if any. The dairy mixture is then cooled, preferably to a temperature between 4°C and 15°C. The dairy mixture is then whipped to aerate the mixture and obtain a dairy mousse. Then, the aerated shelf-stable dairy mousse is filled into packages and sealed, preferably under aseptic conditions. The shelf-stable dairy mousse can optionally be further cooled down from 12 to 24 hours at 4 to 10°C inside its sealed package before being stored at ambient conditions.

For instance, the shelf-stable dairy mousse according to the invention can comprise 50 to 90 % dairy base, a fat content from 4 to 14 wt%, 5 wt % to 40 wt % sugar, preferably from 5 wt % to 30 wt % sugar and more preferably from 10 wt % to 25 wt % sugar, 0.1 to 1 wt % of emulsifier, and 0.5 to 2.5 wt % hydrocolloid-based stabilizer system.

The sugar ingredient of the shelf-stable dairy mousse of the invention is usually natural sugar such as sucrose. Examples of natural sugars are saccharose, all types of syrup glucose or syrup fructose or natural extracts like stevia or rebaudioside A, and their combinations. However, the sugar ingredient can also comprise any sweetener. By "sweetener", one usually means an artificial sweetener. Examples of artificial sweeteners are aspartame, acesulfame, sucralose, saccharin, neotame, and their combinations. Mixtures of natural sugars and artificial sweeteners are also appropriate according to the invention to constitute the sugar ingredient.

The shelf-stable dairy mousse of the present invention has sufficient viscosity to maintain the aerated structure and the sensory attributes of a chilled dairy mousse. Preferably, the apparent viscosity of the dairy mixture before foaming, at a temperature of 20°C is ranging from 10⁵ cP to 3x10⁵ cP.

The viscosity was measured on a sample of the dairy mixture before foaming, after a resting time of at least 4h, to reach a temperature of about 20°C. Measurements were averaged over triplicate. The apparent viscosity of the mix is measured in centipoises (cP) using a Brookfield DV II+ viscosimeter (Brookfield engineering laboratories Inc.). The apparent viscosity is calculated with the product's resistance to a rotary penetration of a T-bar spindle from about 5mm of the surface.

The dairy mousses of the invention are shelf-stable on storage at ambient temperature (e.g. at temperatures around 20° C) and do not require refrigeration during the product shelf life (e.g. for up to 3 months, preferably up to 6 months and even longer, for example from 6 to 12 months). These shelf-stable dairy mousses are ideally suited for use as on-the-go snacks. Moreover, they are ideally suited for use in areas where refrigerators are not available and/or unreliable.

The following examples describe and illustrate certain processes to prepare shelf-stable dairy mousses, which are chocolate mousses. Unless otherwise noted, all percentages and ratios are by weight.

### EXAMPLES

### Example 1

The manufacturing process of the chocolate mousse of Example 1 is the following: the dry ingredients are added to the milk base (which was pre-heated at 60°C), this bulk product is then mixed thoroughly for about 20 minutes and the pH is adjusted. The resulting mixture was then preheated to about 75°C. After homogenization at 110-250 bars (i.e. 11-25 MPa), the resulting mixture was preheated at 95°C and then heated at 130°C for 70 seconds. After that, it is cooled quickly to 85°C, then slowly from 60°C to 10°C. After storage under aseptic conditions, the resulting mixture was whipped under aseptic conditions so as to get an overrun of 110%. The sample was filled under aseptic conditions into containers at 15°C and then stored at 4°C for one day, before being stored at ambient temperature for 6 months.

A homogeneous, dairy chocolate mousse was obtained with the following characteristics:
- dry matter content: 35%
- pH: 6.7
- Water activity (Aw): about 0.98
- fat content: 9%
- sugar content: 25%
- protein content: 4.6 %
- Overrun (OR): 110 %
- Texture and consistency: fresh, melting in mouth, sticky and thick mousse

The ingredients and two characteristics of the shelf-stable chocolate mousse of Example 1 are disclosed in the following Table 1.

**Table 1**

| Ingredients | Mousse of Example 1 |
|---|---|
| Skimmed milk liquid (wt %) | 62,5 |
| Sugar (wt %) | 8,3 |
| Emulsifier: lactic acid ester of mono and diglycerides (wt %) | 0,3 |
| Carrageenan (wt %) | 0,1 |
| Molten chocolate (wt %) | 14,3 |
| Starch (wt %) | 0,9 |
| Gelatine (wt %) | 0,7 |
| Cocoa Butter (wt %) | 3,0 |
| Milk cream liquid past 40% (wt %) | 3,8 |
| Caseinate Sodium Powder (wt %) | 0,9 |
| Agar (wt %) | 0,2 |
| Cocoa Powder (wt %) | 3,3 |
| Anhydrous Milk Fat Powder (wt %) | 1,7 |
| Total | 100,0 |
| **Total fat content** | 9% |
| **Ratio milk fat: cocoa fat** | 36% : 64% |

### Example 2

The process of Example 1 was repeated, using the ingredients described in Table 2 below, to produce the chocolate mousse of Example 2.

A homogeneous, chocolate mousse was obtained with the following characteristics:
- dry matter content: 35%
- pH: 6.6
- Water activity (Aw): around 0.98
- fat content: 5%
- sugar content: 20 %
- protein content: 3.8 %
- Overrun (OR): 95 %
- Texture and consistency: fresh, melting in mouth, sticky and thick mousse

The ingredients and two characteristics of the shelf-stable chocolate mousse of Example 2 are disclosed in the following Table 2.

**Table 2**

| Ingredients | Mousse of Example 2 |
|---|---|
| Skimmed milk liquid bulk (wt %) | 69,0 |
| Sugar (wt %) | 13,0 |
| Molten Chocolate (wt %) | 4,8 |
| Cocoa Butter (wt %) | 0,8 |
| Milk cream liquid past 40% (wt %) | 2,7 |
| Cocoa Powder (wt %) | 7,1 |
| Anhydrous Milk Fat Powder (wt %) | 1,3 |
| Emulsifier lactic acid ester of mono and diglycerides (wt %) | 0.3 |
| Milk protein (wt %) | 0,3 |
| Sodium Alginate (wt %) | 0,7 |
| Total | 100,0 |
| **Total fat content** | 5% |
| **Ratio milk fat: cocoa fat** | 50% : 50% |

The resulting products of examples 1 and 2 have both a good texture and were light and airy. The mousses of examples 1 and 2 retained their aerated aspect and sensory attributes similar to those of a chilled dairy chocolate mousse, even after 6 months storage at 25°C.

## Claims

1. Shelf-stable dairy mousse in the form of an aerated oil-in-water emulsion, the shelf-stable dairy mousse comprising a dairy base, a fat source, an emulsifier and a hydrocolloid-based stabilizer system, **characterized in that** said shelf-stable dairy mousse has a fat content from 4 to 14 wt % with respect to the shelf-stable dairy mousse, **in that** the fat source comprises milk fat and cocoa fat, wherein the weight ratio of milk fat: vegetable fat varies from 25 : 75 to 60 : 40, and **in that** the hydrocolloid-based stabilizer system is selected from the group consisting of agar-agar, alginates, carrageenan, caseinates, gellan, gelatin, and combinations thereof, wherein the hydrocolloid-based stabilizer system is present in the range from 0.5 wt % to 2.5 wt %, with respect to the shelf-stable dairy mousse, wherein the mousse has a water activity (Aw) of from 0.70 to 0.99, and wherein said dairy mousse is stable on storage at a temperature of 20°C to 30°C, over at least 3 months up to 6 months.

2. A shelf-stable dairy mousse according to claim 1 or 2 wherein the emulsifier is selected from the group consisting of mono- and di-glycerides of fatty acids, lactic acid esters of mono- and di-glycerides, sucroesters, polyglycerol esters of fatty acids, and combinations thereof.

3. A shelf-stable dairy mousse according to any one of claims 1 to 3, having an overrun in the range from 10% to 200%.

4. A shelf-stable dairy mousse according to any one of claims 1 to 4, wherein the shelf-stable dairy mousse is a chocolate mousse.

5. A shelf-stable dairy mousse according to any one of claims 1 to 5wherein the shelf-stable dairy mousse has a dry content of from 25 wt % to 48 wt %.

6. A shelf-stable dairy mousse according to any one of claims 1 to 6, wherein the fat source consists of milk fat and cocoa fat.

7. A shelf-stable dairy mousse according to any one of claims 1 to 7, wherein the shelf-stable dairy mousse has a sugar content of from 5 wt % to 40 wt % with respect to the shelf-stable dairy mousse.

8. A shelf-stable dairy mousse according to any one of claims 1 to 8, wherein the emulsifier is present in the range from 0.1 wt % to 1 wt %, with respect to the shelf-stable dairy mousse.

9. A shelf-stable dairy mousse according to any one of claims 1 to 9, wherein the dairy base is present in the range from 50 wt % to 90 wt %, with respect to the shelf-stable dairy mousse.

## Patentansprüche

1. Lagerfähige Milchmousse in Form einer mit Luft versetzten Öl-in-Wasser-Emulsion, wobei die lagerfähige Milchmousse eine Milchbasis, eine Fettquelle, einen Emulgator und ein Stabilisatorsystem auf Hydrokolloid-Basis umfasst, **dadurch gekennzeichnet, dass** die lagerfähige Milchmousse einen Fettgehalt von 4 bis 14 Gew.-% bezogen auf die lagerfähige Milchmousse aufweist, dadurch, dass die Fettquelle Milchfett und Kakaofett umfasst, wobei das Gewichtsverhältnis von Milchfett zu Pflanzenfett variiert von 25 : 75 bis 60 : 40, und dadurch, dass das Stabilisatorsystem ausgewählt ist aus der Gruppe bestehend aus Agar-Agar, Alginaten, Carrageen, Kaseinaten, Gellan, Gelatine und Kombinationen davon, wobei das Stabilisatorsystem auf Hydrokolloid-Basis in der lagerfähigen Milchmousse im Bereich von 0,5 Gew.-% bis 2,5 Gew.-%, bezogen auf die lagerfähige Milchmousse, vorliegt, wobei die Mousse eine Wasseraktivität (Aw) von 0,70 bis 0,99 aufweist und wobei die Milchmousse bei Lagerung bei einer Temperatur von 20 °C bis 30 °C über mindestens 3 bis 6 Monate haltbar ist.

2. Lagerfähige Milchmousse nach Anspruch 1 oder 2, wobei der Emulgator ausgewählt ist aus der Gruppe bestehend aus Mono- und Diglyceriden von Fettsäuren, Milchsäureestern von Mono- und Diglyceriden, Zuckerestern, Polyglycerinestern von Fettsäuren und Kombinationen davon.

3. Lagerfähige Milchmousse nach einem der Ansprüche 1 bis 3, die einen Überschuss im Bereich von 10 % bis 200 % aufweist.

4. Lagerfähige Milchmousse nach einem der Ansprüche 1 bis 4, wobei die lagerfähige Milchmousse eine Schokoladenmousse ist.

5. Lagerfähige Milchmousse nach einem der Ansprüche 1 bis 5, wobei die lagerfähige Milchmousse eine Trockenmasse von 25 Gew.-% bis 48 Gew.-% aufweist.

6. Lagerfähige Milchmousse nach einem der Ansprüche 1 bis 6, wobei die Fettquelle aus Milchfett und Kakaofett besteht.

7. Lagerfähige Milchmousse nach einem der Ansprüche 1 bis 7, wobei die lagerfähige Milchmousse einen Zuckergehalt von 5 Gew.-% bis 40 Gew.-% bezogen auf die lagerfähige Milchmousse aufweist.

8. Lagerfähige Milchmousse nach einem der Ansprüche 1 bis 8, wobei der Emulgator im Bereich von 0,1 Gew.-% bis 1 Gew.-%, bezogen auf die lagerfähige Milchmousse, vorliegt.

9. Lagerfähige Milchmousse nach einem der Ansprüche 1 bis 9, wobei die Milchbasis im Bereich von 50 Gew.-% bis 90 Gew.-%, bezogen auf die lagerfähige Milchmousse, vorliegt.

## Revendications

1. Mousse laitière longue conservation sous la forme d'une émulsion huile dans l'eau aérée, la mousse laitière longue conservation comprenant une base laitière, une source de matière grasse, un émulsifiant et un système de stabilisation à base d'hydrocolloïdes, **caractérisée en ce que** ladite mousse laitière longue conservation présente une teneur en matière grasse de 4 à 14 % en poids par rapport à la mousse laitière longue conservation, **en ce que** la source de matière grasse comprend de la matière grasse de lait et de la matière grasse de cacao, dans laquelle le rapport pondéral de la matière grasse du lait à la matière grasse végétale varie de 25:75 à 60:40 et **en ce que** le système de stabilisation à base d'hydrocolloïdes est choisi dans le groupe constitué par agar-agar, alginates, carraghénanes, caséinates, gellane, gélatine et leurs combinaisons, dans laquelle le système de stabilisation à base d'hydrocolloïdes est présent dans la plage de 0,5 % en poids à 2,5 % en poids, par rapport à la mousse laitière longue conservation, où la mousse a une activité aqueuse (Aw) de 0,70 à 0,99 et où ladite mousse laitière est stable lors du stockage à une température de 20 °C à 30 °C, pendant au moins 3 mois jusqu'à 6 mois.

2. Mousse laitière longue conservation selon la revendication 1 ou 2, dans laquelle l'émulsifiant est choisi dans le groupe constitué par des mono- et diglycérides d'acides gras, esters d'acide lactique de mono- et diglycérides, sucroesters, esters de polyglycérol d'acides gras et leurs combinaisons.

3. Mousse laitière longue conservation selon l'une quelconque des revendications 1 à 3, ayant un foisonnement dans la plage de 10 % à 200 %.

4. Mousse laitière longue conservation selon l'une quelconque des revendications 1 à 4, où la mousse laitière longue conservation est une mousse au chocolat.

5. Mousse laitière longue conservation selon l'une quelconque des revendications 1 à 5, où la mousse laitière longue conservation a une teneur en matière sèche de 25 % en poids à 48 % en poids.

6. Mousse laitière longue conservation selon l'une quelconque des revendications 1 à 6, dans laquelle la source de matière grasse est constituée de matière grasse du lait et de matière grasse du cacao.

7. Mousse laitière longue conservation selon l'une quelconque des revendications 1 à 7, où la mousse laitière longue conservation a une teneur en sucre de 5 % en poids à 40 % en poids par rapport à la mousse laitière longue conservation.

8. Mousse laitière longue conservation selon l'une quelconque des revendications 1 à 8, dans laquelle l'émulsifiant est présent dans la plage de 0,1 % en poids à 1 % en poids par rapport à la mousse laitière longue conservation.

9. Mousse laitière longue conservation selon l'une quelconque des revendications 1 à 9, dans laquelle la base laitière est présente dans la plage de 50 % en poids à 90 % en poids par rapport à la mousse laitière longue conservation.
